# EUROPÄISCHE PATENTANMELDUNG

(11) **EP 1 248 215 A1**
(43) Veröffentlichungstag der Anmeldung: **09.10.2002**
(21) Anmeldenummer: 01108427.4
(22) Anmeldetag: 04.04.2001
(51) Int. Cl.: G06F 17/60

(54) **Chatverfahren**

(71) Anmelder: Suttner, Peter, 89520 Heidenheim (DE)
(72) Erfinder: Suttner, Peter, 89520 Heidenheim (DE)
(74) Vertreter: Lorenz, Werner, Dr.-Ing.

(57) **Zusammenfassung**

Bei einem Chatverfahren in dem auf Clientsystemen durch einen Chatserver Symbole mit Verknüpfungen bzw. Links eingeblendet werden, werden die Verknüpfungen bzw. Links durch Anwählen der Symbole aufgelöst. Die eingeblendeten Symbole 7 werden anhand der auf den Clientsystemen 4 innerhalb eines Chatkommunikationsprozesses eingegebenen Eingabestrings 3 ausgewählt.

## Beschreibung

Die Erfindung betrifft ein Chatverfahren in dem auf Clientsystemen durch einen Chatserver Symbole mit Verknüpfungen bzw. Links eingeblendet werden, gemäß dem Oberbegriff von Anspruch 1, ein Computerprogramm gemäß dem Oberbegriff von Anspruch 19, ein Computerprogrammprodukt gemäß dem Oberbegriff von Anspruch 20, einen Chatserver gemäß dem Oberbegriff von Anspruch 21 und ein Clientsystem gemäß dem Oberbegriff von Anspruch 23.

Chatkommunikationsprozesse erfreuen sich im Internet immer größerer Beliebtheit. Dabei handelt es sich um virtuelle Diskussions- und Gesprächsräume, in denen Menschen über Bildschirm und Tastatur miteinander kommunizieren können. Die steigende Popularität dieser Kommunikationsform wird auch zunehmend von den Werbeträgern erkannt.

Aus der Praxis bekannt sind Chatverfahren, bei denen die Anbieter von Chatservern, sogenannte Werbebanner, die statisch mit dem jeweiligen HTML-Seiten verlinkt sind, in der Chatanwendung einblenden. Bei den Werbebannern handelt es sich um Graphiken, die an den Bildschirmrändern der Chaträume plaziert werden, die die Benutzer der Chaträume, die sogenannten Chatter ansprechen und zum Anklicken der Graphik mit der Maustaste ihrer Computer bewegen sollen. Die Graphiken sind durch Hypertext-Link mit den Produktseiten der beworbenen Waren oder Dienstleistungen verknüpft. Die Graphiken stehen in direktem inhaltlichen Zusammenhang mit den beworbenen Waren und Dienstleistungen.

Die bisherigen Verfahren zur Einblendung von Werbebannern mit statischer Verknüpfung zu den jeweiligen HTML-Seiten beruhen weitgehend auf dem sogenannten Wechselbanner-Verfahren. Bei diesem Verfahren werden dem Chatter bei Aufruf der Chatanwendung auf statische Weise Banner eingeblendet. Die Graphik, die dem Banner zugrunde liegt, referenziert eine Graphikdatei auf einem Internet-Server und diese Graphik wird in periodischen Abständen durch eine andere Graphik ersetzt.

Das Problem des Bannerwerbung-Verfahrens ist, daß die Banner nach Aussagen aller einschlägigen Studien von den Chattern in ca. 99 % der Fälle ignoriert (bzw. nicht angeklickt) werden. Die Chatter konzentrieren sich ausschließlich auf die Tastatureingaben im Chat.

Ein weiteres Problem ist, daß die Bannerwerbung den Chattern gewissermaßen aufgezwungen wird, ohne daß sich der Chatter erst einmal dagegen wehren kann. Die Werbeeinblendungen werden meist als störend empfunden. Hierfür existiert schon eine entsprechende Filter-Software, die die Einblendung der Werbebanner unterdrückt und Werbebannergraphiken in der Chatanwendung ausblendet. Außerdem beeinflussen die Banner das ästhetische Layout, d.h. das Aussehen der Chatanwendung, negativ. Die Anwendung verliert an Übersichtlichkeit.

Der vorliegenden Erfindung liegt daher die Aufgabe zugrunde, ein Chatverfahren der eingangs erwähnten Art, einen Chatserver, ein Clientsystem, ein Computerprogramm und ein Computerprogrammprodukt zu schaffen, durch die die Nachteile des Standes der Technik gelöst werden, insbesondere ein vorteilhaftes, attraktives Einbinden der Werbung in den Chatprozeß möglich ist, um damit die Aufmerksamkeit der Chatter verstärkt auf die Produkte, die Dienstleistungen und Erzeugnisse der Werbenden zu lenken und damit die gewerblichen Anwendungsmöglichkeiten durch Erzielung einer höheren Klickrate deutlich zu steigern.

Diese Aufgabe wird erfindungsgemäß dadurch gelöst, daß die eingeblendeten Symbole anhand der auf den Clientsystemen innerhalb eines Chatkommunikationsprozesses eingegebenen Eingabestrings ausgewählt werden.

Die Aufgabe wird bezüglich des Computerprogramms durch den kennzeichnenden Teil von Anspruch 19, bezüglich des Computerprogrammprodukts durch den kennzeichnenden Teil von Anspruch 20, bezüglich des Chatservers durch den kennzeichnenden Teil von Anspruch 21 und bezüglich des Clientsystems durch den kennzeichnenden Teil von Anspruch 22 gelöst.

Dadurch, daß die eingeblendeten Symbole anhand der auf den Clientsystemen innerhalb eines Chatkommunikationsprozesses eingegebenen Eingabestrings ausgewählt werden, läßt sich eine auf das jeweilige aktuelle Gesprächsthema der Chatter zugeschnittene Werbung anzeigen. Ein gesteigertes Interesse der Chatter an den Werbeeinblendungen kann dadurch erreicht werden.

Das Gesprächsthema kann in einfacher und vorteilhafter Weise ermittelt werden, indem die innerhalb des Chatkommunikationsprozesses von den Chattern eingegebenen Sätzen durchsucht werden. Man erweckt dadurch ein höheres Interesse bei den Chattern und gewinnt ihre Aufmerksamkeit. Die Clickrate auf die Werbeeinblendungen wird deutlich erhöht. Je nach Chatgesprächsthema werden entsprechende Symbole für Produkte, Dienstleistungen und Erzeugnisse eingeblendet. Die gewerblichen Anwendungsmöglichkeiten des Chats werden dadurch verbessert. In vorteilhafter Weise wird die Werbung zu einem interaktiven Bestandteil des Chatprozesses. Die Chatter werden angeregt, mit Worten und Symbolen spielerisch umzugehen und sich für die dahinterstehenden Produktseiten zu interessieren. Somit verliert die Werbung sogleich die abschreckende, aufgezwungende Komponente, indem der Chatter letztlich die Werbung selbst einblendet. Der Chatkommunikationsprozeß soll durch den Überraschungseffekt, welche Symbole wann und auf welche Weise eingeblendet werden, interessanter werden.

Vorteilhaft ist außerdem, daß in einer Speichereinheit Schlüsselwörter abgelegt werden und die Speichereinheit als Konfigurationsdatei und/oder als Datenbank ausgebildet wird und daß die Konfigurationsdatei frei definierbar, editierbar und erweiterbar ausgebildet wird.

Durch diese Maßnahmen können themenbezogene Schlüsselwörter in einer Konfigurationsdatei abgelegt und zur Ermittlung der themenbezogenen Werbung im Chat herangezogen werden. Dadurch, daß die Konfigurationsdatei frei definierbar, editierbar und erweiterbar ausgebildet wird, kann diese in vorteilhafter Weise dynamisch verändert werden, wenn z.B. neue Werbende aufgenommen werden sollen oder sich Produkte oder Dienstleistungen oder Verknüpfungen und Links ändern. Die Speichereinheit kann in einer anderen Ausgestaltung der Erfindung natürlich auch z.B. als Datenbank ausgebildet sein.

Erfindungsgemäß kann ferner vorgesehen sein, daß die Eingabestrings nach Schlüsselwörtern durchsucht werden und die Eingabestrings vor der Durchsuchung in einzelne Bestandteile zerlegt und mit den in der Konfigurationsdatei abgelegten Schlüsselwörtern verglichen werden und in der Konfigurationsdatei den Schlüsselwörtern Symbole mit Verknüpfungen bzw. Links zugeordnet werden.

Durch diese Maßnahmen können anhand der Chateingaben die zugehörigen themenabhängigen Werbungen durch Symbole mit Verknüpfungen bzw. Links in einfacher, vorteilhafter Weise ermittelt werden.

Von Vorteil ist es, wenn bei einer Übereinstimmung eines Bestandteiles des Eingabestrings mit einem Schlüsselwort der Konfigurationsdatei der übereinstimmende Bestandteil durch das in der Konfigurationsdatei zugeordnete Symbol ersetzt wird und aus den nicht ersetzten ursprünglichen Bestandteilen des Eingabestrings und durch die Symbole der ersetzten Bestandteile ein Ausgabestring gebildet wird, und je nach Voreinstellung der Clientsysteme der Ausgabe- und/oder der Eingabestring an die Clientsysteme gesendet und dort angezeigt wird.

Durch diese Maßnahmen werden in vorteilhafter Weise Schlüsselwörter in den Chatbenutzereingaben durch Symbole ersetzt und bei den weiteren Chatteilnehmern angezeigt. Nun befinden sich die Symbole mit den Verknüpfungen bzw. Links, die auf die Produktseiten der Werbenden zeigen, im interaktiven Chatkommunikationsprozeß und nicht mehr außerhalb des Prozesses, z.B. an Bildschirmrändern der Chaträume. Dadurch, daß je nach Voreinstellung der Clientsysteme der Ausgabe- und/oder der Eingabestring an die Clientsysteme gesendet und dort angezeigt werden, können die Chatteilnehmer per Voreinstellung festlegen, ob die Symbole gar nicht vollständig oder nur teilweise eingeblendet werden, dies steigert die Akzeptanz des Chatverfahrens bei den Chattern erheblich. Die Werbeeinblendungen werden von den Chattern nicht als aufgezwungen empfunden.

Erfindungsgemäß kann ferner vorgesehen sein, daß die Symbole als Graphiken ausgebildet werden.

Dadurch, daß die Symbole als Graphiken ausgebildet werden, können besonders ansprechende themenbezogene Bilder als Werbung eingeblendet werden. Außerdem gestaltet sich der ansonsten triste und einfache Chattext abwechslungsreicher und farblich ansprechender. Die Chatter können mit den Graphiken spielerisch umgehen und es entsteht ein Überraschungseffekt, welche Graphiken wann und auf welche Weise eingeblendet werden. Der Chat wird dadurch interessanter.

Erfindungsgemäß kann ferner vorgesehen sein, daß die Symbole als Banner, insbesondere als Werbebanner, ausgebildet werden und daß die Werbebanner in einer Bannerspeichereinheit, insbesondere einer Bannerdatenbank, abgelegt werden, die folgende Zuordnungen enthält:
- jedem Werbebanner wird wenigstens eine Kategorie zugeordnet;
- jeder Kategorie wird wenigstens ein Werbebanner zugeordnet; und
- jeder Kategorie wird wenigstens ein Schlüsselwort zugeordnet.

Durch diese Maßnahmen kann das bisherige Verfahren durch Banner, insbesondere Werbebanner, ergänzt werden, die in vorteilhafter Weise ebenfalls gesprächsthemenabhängig angezeigt werden. Die anzuzeigenden Werbebanner werden z.B. in einer Datenbank abgespeichert.

Von Vorteil ist es, wenn aus den Zuordnungen eine Matching-Liste, die zu jedem Schlüsselbegriff die entsprechenden Werbebanner referenziert, gebildet wird und wenn mittels eines Matching-Algorithmus in der Matching-Liste nach Übereinstimmungen der Wortbestandteile des zerlegten Eingabestrings mit den Schlüsselbegriffen gesucht wird.

Durch diese Maßnahmen können die themenabhängigen Werbebanner aus den Benutzereingaben in einfacher Weise ermittelt werden.

Vorteilhaft ist außerdem, daß jedem Werbebanner ein Banner-Counter zugeordnet wird, wobei für jede Übereinstimmung der Banner-Counter der Werbebanner, die den übereinstimmenden Schlüsselbegriff in der Matching-Liste zugeordnet sind, erhöht wird und daß die Werbebanner auf dem Clientsystem pro vordefinierter Zeiteinheit in einer Schleife angezeigt werden und daß das Werbebanner, bei dem der Banner-Counter maximal ist, in der Schleife als nächstes angezeigt wird.

Durch diese Maßnahmen wird sichergestellt, daß nicht immer dieselben Werbebanner bei einer Chatsitzung angezeigt werden, da sich die Gesprächsthemen während einer Chatunterhaltung durchaus ändern können. Deshalb wird ein und dasselbe Werbebanner nur für eine bestimmte, vordefinierte Zeit angezeigt und dieses in einer Schleife nach der vordefinierten Zeiteinheit immer wieder durch ein anderes ersetzt. In einfacher und vorteilhafter Weise wird immer das Werbebanner herangezogen, das auf das aktuelle Gesprächsthema der Chatter am besten paßt. Die Auswahl erfolgt mit Hilfe des Banner-Counters, der anzeigt, wie oft Schlüsselwörter, die das Werbebanner referenzieren, im Chatgespräch aufgetreten sind. In vorteilhafter Weise wird dann das Werbebanner zur Anzeige gebracht, bei dem der Banner-Counter maximal ist bzw. wenn mehrere Werbebanner mit maximalem Banner-Counter existieren, wird eines davon per Zufall ermittelt und angezeigt.

Vorteilhafte Ausgestaltungen und Weiterbildungen der Erfindung ergeben sich aus den weiteren Unteransprüchen und aus dem nachfolgend anhand der Zeichnung prinzipmäßig beschriebenen Ausführungsbeispiel.

Vorteile bezüglich des Computerprogramms, des Computerprogrammprodukts, des Chatservers und des Clientsystems ergeben sich analog zu den schon bezüglich des Chatverfahrens aufgezeigten Vorteilen und anhand der Beschreibung.

Es zeigt:
- Fig. 1: eine prinzipmäßige Darstellung einer Benutzerschnittstelle mit dem erfindungsgemäßen Chatverfahren;
- Fig. 2: ein Flußdiagramm des erfindungsgemäßen Chatverfahrens;
- Fig. 3: ein Flußdiagramm eines CIcon-Programmes; und
- Fig. 4: ein Flußdiagramm eines ergänzenden Bannerwerbemoduls.

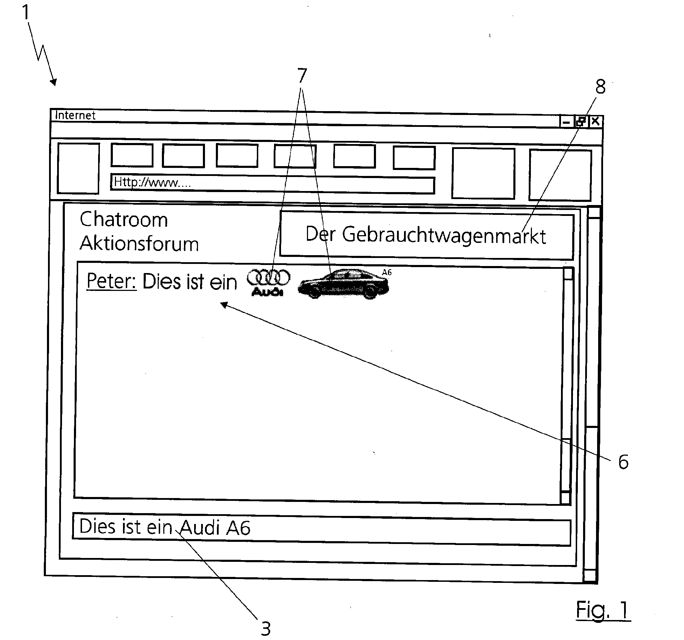

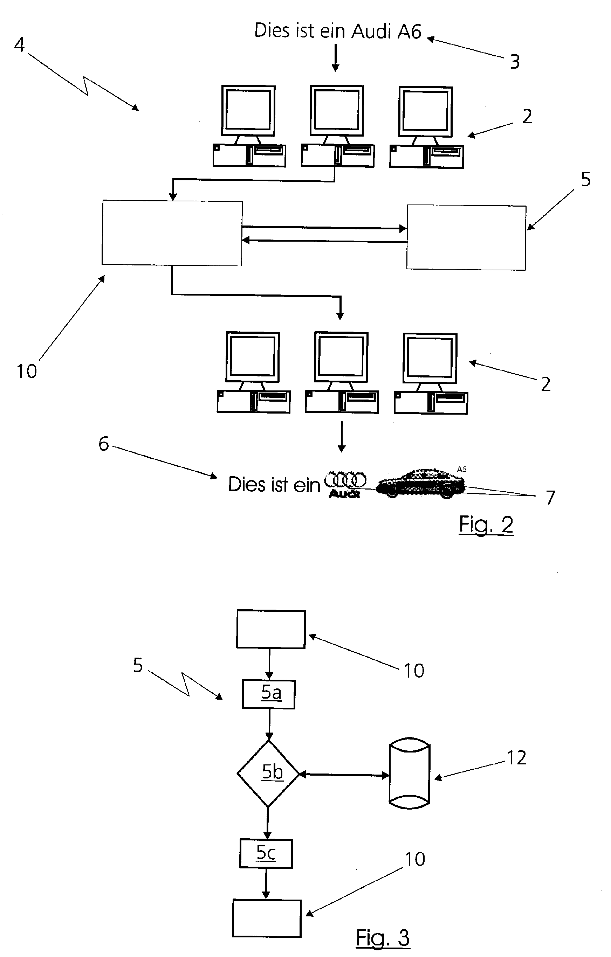

Wie aus Fig. 1 ersichtlich, zeigt die Benutzerschnittstelle 1 eines in der Fig. 2 dargestellten Clientsystems 2 einen Chatraum mit dem Namen "Aktionsforum" an. Der hier nicht näher dargestellte Chatbenutzer "Peter" hat den Chatraum "Aktionsforum" betreten und nimmt am Gespräch teil. Weiter ist aus Fig. 1 ersichtlich, daß der Chatbenutzer einen Eingabestring 3 "Dies ist ein Audi A6" eingegeben hat. Das in Fig. 2 näher beschriebene Chatverfahren 4 hat den Eingabestring 3 mittels des in Fig. 3 dargestellten CIcon-Programmes 5 durch einen Ausgabestring 6 ersetzt und allen anderen im Chatraum "Aktionsforum" befindlichen Chatbenutzern zur Anzeige gebracht.

Wie aus Fig. 1 ersichtlich, sind die Symbole im vorliegenden Ausführungsbeispiel als graphische Symbole 7 dargestellt.

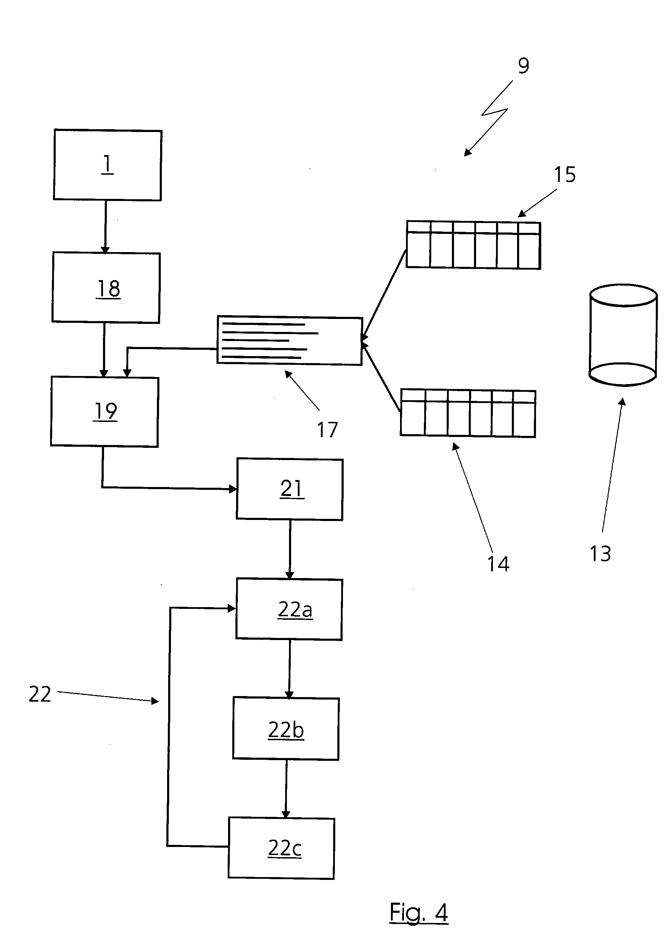

Der Wortbestandteil "Audi A6" des Eingabestrings 3 wird dabei durch das entsprechende graphische Symbol 7 ersetzt. Weiter zeigt Fig. 1 in der Benutzerschnittstelle 1 ein themenabhängiges, zum Thema "Audi A6" passendes, Werbebanner 8 mit der Aufschrift "Gebrauchtwagenmarkt", das nach Eingabe des Eingabestrings 3 "Dies ist ein Audi A6" von einem in Fig. 4 näher dargestellten Bannerwerbemodul 9 ermittelt wurde. Im Ausführungsbeispiel sind sowohl das graphische Symbol 7 als auch das Werbebanner 8 "klickbar" und leiten unmittelbar zu den betreffenden Produktinformationen der jeweiligen Werbeträger in lokalen oder weltweiten Netzwerken weiter.
Wie aus Fig. 2 ersichtlich, werden die Eingaben eines nicht dargestellten Benutzers auf dem Clientsystem 2 in Form eines Eingabestrings 3 "Dies ist ein Audi A6" an den Chatserver 10 gesendet. Der Eingabestring 3 wird vom Chatserver 10 an das CIcon-Programm 5 weitergeleitet und dort verarbeitet. Nach der Verarbeitung erhält der Chatserver 10 den modifizierten, eventuell mit Symbolen versehenen Eingabestring in Form eines Ausgabestrings 6 vom CIcon-Programm zurück und sendet diesen an alle Clientsysteme 2, deren nicht dargestellte Benutzer am Chatgespräch teilnehmen und sich für eine Einblendung von graphischen Symbolen 7 entschieden haben, und wird dort zur Anzeige gebracht.

Wie aus Fig. 3 ersichtlich, erhält das CIcon-Programm 5 vom Chatserver 10 den in Fig. 2 dargestellten Eingabestring 3 des Chatters, durchsucht diesen nach nicht dargestellten Schlüsselwörtern 11, die in einer frei definierbaren Konfigurationsdatei 12 gespeichert sind. Das CIcon-Programm 5 zerlegt nun in einem Schritt 5a die Wörter und Satzzeichen des Eingabestrings 3 und vergleicht diese in einem Schritt 5b mit den definierten Schlüsselwörtern 11 in der Konfigurationsdatei 12. Ist eine Übereinstimmung gefunden, so wird das Wort in einem Schritt 5c durch ein werbendes graphisches Symbol 7 ersetzt. Das Programm ersetzt hierbei nicht nur das Wort durch ein graphisches Symbol 7, sondern ermöglicht es auch, das graphische Symbol 7 gleich mit einer bestimmten Aktion oder einer Verknüpfung bzw. einem Link zu kombinieren. Ist der String verarbeitet, gibt das CIcon-Programm den bearbeiteten String wieder an den Chatserver 10 zurück. In einfacher und vorteilhafter Weise könnten der Chatserver 10, das CIcon-Programm 5 und die Konfigurationsdatei 12 auf einem gemeinsamen Rechner ablaufen bzw. abgelegt sein.

In der erfindungsgemäßen Ausgestaltung ist das CIcon-Programm 5 in der Programmierhochsprache C++ geschrieben, was eine einfache Implementierung und eine schnelle Ausführungsgeschwindigkeit des Programms mit sich bringt. Das CIcon-Programm 5 liest den Eingabestring 3 des Chatservers 10 aus und ersetzt diesen durch ein graphisches Symbol 7, das in einer Konfigurationsdatei 12 hinterlegt ist und die zugehörigen HTML-Kommandos. Das CIcon-Programm 5 kann mehrere Schlüsselwörter 11 in einem Eingabestring 3 ersetzen. Die Konfigurationsdatei ist in zwei Zeilen aufgebaut. Die erste Zeile enthält die zu ersetzenden Schlüsselworte 11, die durch ein Trennzeichen voneinander getrennt sind - in dieser Version das Pipe-Symbol. Die zweite Zeile enthält das HTML-Kommando, das später an der Stelle des zu ersetzenden Wortes plaziert wird.

Der durch das CIcon-Programm 5 modifizierte String enthält jetzt die graphischen Symbole 7, die im Zuge des Datenverarbeitungsverfahrens ersetzt wurden, mit den dazugehörigen Verknüpfungen. Der Chat-Benutzer kann nun auf das graphische Symbol 7 in seinem Browser klicken, um mehr Informationen über das eingesetzte graphische Symbol 7 zu erhalten.

Wie aus Fig. 4 ersichtlich, basiert das Bannerwerbemodul 9 auf einer Bannerdatenbank 13, die folgende Zuordnungen enthält:
Jedem Werbebanner 8 werden verschiedene Kategorien zugeordnet (z.B. Computer, Sport, Freizeit, Musik oder wie im vorliegenden Ausführungsbeispiel A, B, C), diese sind in der Bannertabelle 14 wie folgt gespeichert:

| Banner | Kategorie | Graphik |
|---|---|---|
| 01 | A, C | [Objekt] |
| 02 | B, C | [Objekt] |

Jeder Kategorie werden verschiedene Schlüsselbegriffe 15 zugeordnet (z.B. für Computer: Maus, Tastatur, Festplatte, Monitor oder wie im vorliegenden Ausführungsbeispiel für A: a, b, c). Diese Zuordnung wird in der Dictionary-Tabelle 16 gespeichert:

| Kategorie | zugeordnete Begriffe |
|---|---|
| A | a, b, c |
| B | d, e |
| C | f |

Pro Banner kann es mehrere Kategorien geben - wobei eine Kategorie auch mehreren Bannern zugeordnet werden kann (dies entspricht einer m zu n-Beziehung).

Aus den Tabellen 14 und 16 wird eine Matching-Liste 17 generiert, die zu jedem Schlüsselbegriff 15 die passenden Werbebanner 8 referenziert. In dieser Liste können somit einem Schlüsselbegriff 15 natürlich auch mehrere Werbebanner 8 zugeordnet werden.

Um eine effiziente Implementierung gewährleisten zu können, wurde speziell diese Form der Matching-Liste 17 gewählt, da sie in vorteilhafter Weise implementierungstechnisch als Hash-Tabelle umgesetzt werden kann.

| Begriff | Banner |
|---|---|
| a | 01 |
| b | 01 |
| c | 01 |
| d | 02 |
| e | 02 |
| f | 01,02 |

Die Eingabe des Benutzers wird dem Parser 18 von der Benutzerschnittstelle 1 zur Verfügung gestellt. Der Parser 18 zerlegt die Eingabe des Benutzers in einzelne Worte und übergibt diese einem Matching-Algorithmus 19, der nun für jedes Wort feststellt, ob es einen Eintrag in der Matching-Liste 17 gibt:

| | |
|---|---|
| geparste Eingabe | b c d x y f |
| matching Banner | 01 01 01 02 02 |

Wird eine Übereinstimmung gefunden, so wird für das referenzierte Werbebanner 8 ein, dem Werbebanner 8 zugeordneter Banner-Counter 20 erhöht.

| Banner | Banner-Counter |
|---|---|
| 01 | 3 |
| 02 | 2 |

Dies geschieht bei der Banner-Counter-Aktualisierung 21.

Die Auslieferung der Werbebanner 8 geschieht in einer Schleife 22. Dabei wird pro vordefinierter Zeiteinheit ein Werbebanner 8 angezeigt. Um das entsprechende Werbebanner 8 zu ermitteln, wird in Schritt 22a das Maximum der Banner-Counter 20 ermittelt bzw. bei Übereinstimmung der Counter mehrerer Werbebanner 8 wird das Zufallsprinzip angewendet. Das ermittelte Werbebanner 8 wird im Schritt 22b dann beim Benutzer angezeigt, gleichzeitig der Banner-Counter 20 des angezeigten Werbebanners 8 auf Null gesetzt, damit eine erneute Anzeige beim Benutzer innerhalb einer bestimmten Zeit verhindert wird. Falls dies nicht genügen sollte, kann auch auf dem Server, auf dem die Banner abgelegt sind, vermerkt werden, welches Werbebanner 8 als letztes an einen bestimmten Benutzer ausgeliefert wurde, um somit eine erneute Auslieferung für einen bestimmten Zeitraum noch effektiver zu verhindern.

Im letzten Schleifenschritt 22c folgt nun eine bestimmte vordefinierte Wartezeit, bevor die Schleife 22 wieder beim ersten Schritt 22a beginnt.

Mit dieser Ausgestaltung erhält man nun in einfacher und vorteilhafter Weise eine personalisierte Werbung in Abhängigkeit der Benutzereingaben im Chat. Dieses Ziel kann ohne großen technischen bzw. programmiertechnischen Aufwand erreicht werden.

## Patentansprüche

1. Chatverfahren in dem auf Clientsystemen durch einen Chatserver Symbole mit Verknüpfungen bzw. Links eingeblendet werden, wobei die Verknüpfungen bzw. Links durch Anwählen der Symbole aufgelöst werden,
**dadurch gekennzeichnet, daß**
die eingeblendeten Symbole (7) anhand der auf den Clientsystemen (4) innerhalb eines Chatkommunikationsprozesses eingegebenen Eingabestrings (3) ausgewählt werden.

2. Chatverfahren nach Anspruch 1,
**dadurch gekennzeichnet, daß**
in einer Speichereinheit Schlüsselwörter abgelegt werden.

3. Chatverfahren nach Anspruch 2,
**dadurch gekennzeichnet, daß**
die Speichereinheit als Konfigurationsdatei (12) und/oder Datenbank ausgebildet wird.

4. Chatverfahren nach Anspruch 3,
**dadurch gekennzeichnet, daß**
die Konfigurationsdatei (12) frei definierbar, editierbar und erweiterbar ausgebildet wird.

5. Chatverfahren nach einem der Ansprüche 1 bis 4,
**dadurch gekennzeichnet, daß**
die Eingabestrings (3) nach Schlüsselwörtern (11) durchsucht werden.

6. Chatverfahren nach Anspruch 5,
**dadurch gekennzeichnet, daß**
die Eingabestrings (3) vor der Durchsuchung in einzelne Bestandteile zerlegt und mit den in der Konfigurationsdatei (12) abgelegten Schlüsselwörtern (11) verglichen werden.

7. Chatverfahren nach einem der Ansprüche 3 bis 6,
**dadurch gekennzeichnet, daß**
in der Konfigurationsdatei (12) den Schlüsselwörtern (11) Symbole (7) mit Verknüpfungen bzw. Links zugeordnet werden.

8. Chatverfahren nach einem der Ansprüche 3 bis 7,
**dadurch gekennzeichnet, daß**
bei einer Übereinstimmung eines Bestandteiles des Eingabestrings (3) mit einem Schlüsselwort (11) der Konfigurationsdatei (12), der übereinstimmende Bestandteil durch das in der Konfigurationsdatei (12) zugeordnete Symbol (7) ersetzt wird.

9. Chatverfahren nach Anspruch 8,
**dadurch gekennzeichnet, daß**
aus den nicht ersetzten ursprünglichen Bestandteilen des Eingabestrings (3) und durch die Symbole (7) der ersetzten Bestandteile ein Ausgabestring (6) gebildet wird.

10. Chatverfahren nach Anspruch 9,
**dadurch gekennzeichnet, daß**
je nach Voreinstellung der Clientsysteme (2) der Ausgabe(6) und/oder der Eingabestring (3) an die Clientsysteme (2) gesendet und dort angezeigt wird.

11. Chatverfahren nach einem der Ansprüche 1 bis 10,
**dadurch gekennzeichnet, daß**
die Symbole als Graphiken (7) ausgebildet werden.

12. Chatverfahren nach einem der Ansprüche 1 bis 11,
**dadurch gekennzeichnet, daß**
die Symbole als Banner, insbesondere Werbebanner (8) ausgebildet werden.

13. Chatverfahren nach einem der Ansprüche 1 bis 12,
**dadurch gekennzeichnet, daß**
die Werbebanner (8) in einer Bannerspeichereinheit, insbesondere einer Bannerdatenbank (13) abgelegt werden, die folgende Zuordnungen enthält:
- jedem Werbebanner (8) wird wenigstens eine Kategorie zugeordnet;
- jeder Kategorie wird wenigstens ein Werbebanner (8) zugeordnet; und
- jeder Kategorie wird wenigstens ein Schlüsselbegriff (15) zugeordnet.

14. Chatverfahren nach Anspruch 13,
**dadurch gekennzeichnet, daß**
aus den Zuordnungen eine Matching-Liste (17), die zu jedem Schlüsselbegriff (15) die entsprechenden Werbebanner (8) referenziert, gebildet wird.

15. Chatverfahren nach Anspruch 14,
**dadurch gekennzeichnet, daß**
mittels eines Matching-Algorithmus (19) in der Matching-Liste (17) nach Übereinstimmungen der Wortbestandteile des zerlegten Eingabestrings (3) mit den Schlüsselbegriffen (15) gesucht wird.

16. Chatverfahren nach Anspruch 14 oder 15,
**dadurch gekennzeichnet, daß**
jedem Werbebanner (8) ein Banner-Counter (20) zugeordnet wird und für jede Übereinstimmung der Banner-Counter (20) der Werbebanner (8), die den übereinstimmenden Schlüsselbegriff (15) in der Matching-Liste (17) zugeordnet sind, erhöht wird.

17. Chatverfahren nach einem der Ansprüche 12 bis 16,
**dadurch gekennzeichnet, daß**
die Werbebanner (8) auf dem Clientsystem (2) pro vordefinierter Zeiteinheit in einer Schleife (22) angezeigt werden.

18. Chatverfahren nach Anspruch 17,
**dadurch gekennzeichnet, daß**
das Werbebanner (8), bei dem der Banner-Counter (20) maximal ist, in der Schleife (22) als nächstes angezeigt wird.

19. Computerprogramm mit Programmcodemitteln, um alle Chatverfahrensschritte von jedem beliebigen der Ansprüche 1 bis 18 durchzuführen, wenn das Programm auf einem Computer ausgeführt wird.

20. Computerprogrammprodukt mit Programmcodemitteln, die auf einem computerlesbaren Datenträger gespeichert sind, um das Chatverfahren nach jedem beliebigen der Ansprüche 1 bis 18 durchzuführen, wenn das Programmprodukt auf einem Computer ausgeführt wird.

21. Chatserver (10) zur Durchführung des Chatverfahrens (4) gemäß einem der Ansprüche 1 bis 18 mit folgenden Merkmalen:
- eine Empfangseinheit, die Informationen, insbesondere Eingabestrings (3) von Clientsystemen (2) empfängt;s
- eine Speichereinheit, die Schlüsselwörter (11) und Symbole (7) mit Verknüpfungen bzw. Links enthält;
- eine Ausführungsumgebung, um das Computerprogramm gemäß
Anspruch 20 auszuführen; und
- eine Sendeeinrichtung, die die Eingabestrings (3) und/oder von dem Computerprogramm gemäß Anspruch 20 erzeugte Ausgabestrings (6) an die Clientsysteme (2) versenden kann.

22. Chatserver nach Anspruch 21,
**dadurch gekennzeichnet, daß** die Speichereinheit eine Bannerdatenbank (13) mit Werbebannern (8) und Zuordnungen gemäß wenigstens einem der Ansprüche 13 bis 18 enthält.

23. Clientsystem (2) zur Durchführung des Chatverfahrens (4) gemäß einem der Ansprüche 1 bis 18 mit folgenden Merkmalen:
- eine Benutzerschnittstelle (1) zur Eingabe und zur Darstellung von Eingabe- (3) und Ausgabestrings (6);
- eine Ausführungsumgebung, um eine Anwendung auszuführen, die Eingabe- (3) und Ausgabestrings (6) empfängt und darstellt;
- eine Sendeeinheit, die Information, insbesondere Eingabestrings (3) zu einem Chatserver (10) gemäß Anspruch 21 sendet; und
- eine Empfangseinheit, die die Eingabestrings (3) und/oder von einem Computerprogramm gemäß Anspruch 20 erzeugte Ausgabestrings (6) von einem Chatserver (10) gemäß Anspruch 21 empfängt.
